# EUROPÄISCHE PATENTSCHRIFT

(11) **EP 1 015 285 B1**
(45) Veröffentlichungstag und Bekanntmachung des Hinweises auf die Patenterteilung: **27.07.2005**
(21) Anmeldenummer: 98945113.3
(22) Anmeldetag: 29.07.1998
(51) Int. Cl.: B60S 1/08, B60S 1/18

(54) **WISCHVORRICHTUNG**
WIPER
SYSTEME D'ESSUIE-GLACE

(30) Priorität: 20.09.1997 DE 19741630
(43) Veröffentlichungstag der Anmeldung: 05.07.2000
(73) Patentinhaber: Volkswagen Aktiengesellschaft, 38436 Wolfsburg (DE)
(72) Erfinder: OSTROWSKI, Wolfgang, D-38446 Wolfsburg (DE)
(74) Vertreter: Rabe, Andreas
(86) Internationale Anmeldenummer: PCT/EP1998/004748
(87) Internationale Veröffentlichungsnummer: WO 1999/015380

(56) Entgegenhaltungen:
- DE-A- 3 208 121
- DE-A- 3 730 900
- DE-A- 3 839 862
- DE-A- 19 634 559
- FR-A- 2 457 794
- US-A- 5 331 257
- PATENT ABSTRACTS OF JAPAN vol. 017, no. 212 (M-1402), 26. April 1993 & JP 04 353057 A (ASMO CO LTD), 8. Dezember 1992

## Beschreibung

Die Erfindung betrifft eine Wischvorrichtung, insbesondere für Kraftfahrzeuge, gemäß dem Oberbegriff des Patentanspruchs 1.

Eine solche Wischvorrichtung ist z. B. aus der DE 32 08 121 bekannt, die einen drehrichtungsumkehrbaren elektrischen Motor aufweist, an dessen Abtriebswelle starr mindestens ein Wischerarm angeordnet ist. Dem Motor ist ein Motorregelkreis zugeordnet, der einen Positionsregler aufweist, der eine Stellgröße für den Motorschaltkreis erzeugt, wobei einerseits die Drehlage der Motor-Abtriebswelle als Regelgröße und andererseits ein vorgebbarer Ablauf der Wischerbewegung als zeitabhängige Führungsgröße dem Positionsregler zugeführt wird. Zur Erfassung der Regelgröße ist mit der Motor-Abtriebswelle ein Drehgeber starr gekoppelt, der die Ist-Stellung der Abtriebswelle als elektrische Größe ausgibt, wobei der Drehgeber beispielsweise als Potentiometer ausgebildet ist. Zur Erzeugung der Führungsgröße ist ein Funktionsgenerator vorgesehen, dessen Ausgang mit dem Sollwert-Eingang des Positionsregiers verbunden ist. Am Ausgang des Funktionsgenerators tritt eine periodische Ausgangsanpassung auf, deren Spannungsverlauf eine Funktion der Zeit ist. Zur Realisierung von Stufen unterschiedlicher Wischgeschwindigkeiten wird der Funktionsgenerator mit einer einstellbaren Taktfrequenz angesteuert, was mittels eines spannungsgesteuerten Oszillators erreicht wird. Soll der Wischwinkel verändert werden, so muß die vom Drehgenerator abgegebene Spannung entsprechend nachgeführt werden. Bei einer Ausbildung als Potentiometer erfolgt dies über eine Erhöhung bzw. Erniedrigung einer zugeordneten Gleichspannungsquelle, so daß der dem Funktionsgenerator vorgegebene Momentanwert entsprechend eher oder später erreicht wird, was eine Verkleinerung bzw. Vergrößerung des Wischwinkels zur Folge hat.

Bei Wischvorrichtungen tritt das Problem auf, daß beträchtliche Windkräfte auf den oder die Wischerarme wirken, wenn beispielsweise ein Kraftfahrzeug mit hoher Geschwindigkeit fährt. Die hat zur Folge, daß sich der Wischerarm aufgrund der auftretenden Windkräfte über den normalen oberen Umkehrpunkt hinaus bewegen und erst an einer Stelle jenseits dieses Punktes umkehren kann. Hierdurch kann das am Wischerarm befestigte Wischerblatt auf den Fensterpfosten des Fahrzeuges treffen und entsprechende Beschädigungen verursachen. Es besteht ferner die Gefahr, daß der Wischerarm über den Fensterposten hinausschwingt.

Zur Lösung dieses Problems ist aus der DE 41 10 170 eine Wischervorrichtung bekannt, die folgende Bestandteile umfaßt: Eine drehbar gelagerte Hauptwelle, an der ein Wischerarm befestigt ist, einen an der Hauptwelle befestigtes Nockenelement, eine drehbar am Haupthebel über einen ersten Stift gelagerte Platte, einen Unterhebel, der ein Ende aufweist, das um das Nockenelement angeordnet ist, und ein weiteres Ende, das über einen zweiten Stift mit der Platte verbunden ist, einen über einen dritten Stift drehbar an der Platte gelagerten Arm, der einen Gelenkabschnitt besitzt, mit dem ein Antriebsmechanismus für den Wischer in Verbindung steht, und eine Drehfeder, die zwischen der Platte und dem Arm angeordnet ist und den Arm in einer vorgegebenen Position hält. Im Betrieb dreht sich das Nockenelement am oberen Umkehrpunkt, wodurch die Platte versucht, sich zusammen mit dem Arm über den Unterhebel um den ersten Stift zu drehen. Da jedoch die Platte und der Arm über den Gelenkabschnitt mit dem Wischerantriebsmechanismus verbunden sind, dreht sich der Haupthebel. Mit anderen Worten, die Position des Wischerarmes am oberen Umkehrpunkt wird gegenüber der Normalposition um eine Strecke zurückverschoben, die dem Drehwinkel des Haupthebels entspricht. Selbst wenn daher der Wischerarm durch Windkräfte bewegt wird, wenn sich das Fahrzeug mit hoher Geschwindigkeit bewegt, wird die Bewegung des Wischerarmes aufgrund dieser Windkräfte durch den vorstehend erwähnten Rückhalteeffekt kompensiert, so daß der Wischerarm am normalen oberen Umkehrpunkt umkehrt. Der Wischerarm kann somit daran gehindert werden, gegen den Fensterpfosten zu schlagen, ohne daß hierdurch das Sichtfeld in Mitleidenschaft gezogen wird. Die bekannte Wischvorrichtung hat jedoch einen äußerst komplexen mechanischen Aufbau und ist schwierig zu fertigen.

Aus der DE 38 39 862 ist eine Wischvorrichtung bekannt, bei der zur Lösung des Problems vorgeschlagen wird, den Wischwinkel des Blattes bei hoher Fahrgeschwindigkeit des Fahrzeuges zu verringern. Dabei umfaßt die Wischervorrichtung ein feststehendes Bauteil, das an der Fahrzeugkarosserie befestigt ist, eine drehbar gelagerte Welle, einen ein Blatt tragenden Arm, der mit der Welle verbunden ist, ein mit anderen Ende der Welle verbundenes Schwenkelement, eine Antriebsvorrichtung zur Erzielung einer Winkelpendelbewegung des Schwenkelementes, eine Einstelleinrichtung zur Einstellung des Verbindungspunktes zwischen dem Schwenkelement und der Antriebsvorrichtung und eine Steuereinrichtung zur Ansteuerung der Stelleinrichtung in Abhängigkeit von der Fahrzeuggeschwindigkeit und der Winkelgeschwindigkeit des Schwenkelementes. Die Antriebsvorrichtung umfaßt einen ersten Bolzen, der von einem ersten Motor angetrieben wird und eine kreisförmige Bahn durchläuft. Der erste Bolzen ist funktionell mit einem zweiten Bolzen verbunden, der mit dem Schwenkelement über eine Strebe bewegt wird. Da die Strebe durch die Betätigung des Motors in eine Hin- und Herbewegung versetzt wird, wird das Schwenkelement in eine Schwenkbewegung um die Drehachse der Welle , die fest mit dem Schwenkelement verbunden ist, versetzt. Die Welle ist drehbar in dem feststehenden Bauteil gelagert. Mit dem Schwenkelement wird ein weiterer Bolzen bewegt. Zwischen dem Bolzen und einem Kugelgelenk, das zur Einstelleinrichtung gehört, ist eine weitere Strebe angeordnet. Durch die Schwenkbewegung des Schwenkelementes wird die Strebe in eine Hin- und Herbewegung versetzt, wodurch das an der Welle befestigt Schwenkelement geschwenkt wird. Die Einstelleinrichtung umfaßt einen weiteren Motor mit einer weiteren drehbaren Welle, der auf dem mit der Welle der Antriebsvorrichtung verbundenen Schwenkelement angebracht ist, und ein Schneckenrad, das fest mit der Welle der Einstelleinrichtung verbunden ist. Das Schneckenrad kämmt mit einem fest an dem rechten Ende einer weiteren Welle angebrachten weiteren Schneckenrad. An dem linken Ende der Welle ist ein weiteres Schneckenrad befestigt, das mit einem Zahnrad kämmt. Das Zahnrad, das Kugelgelenk und ein Sensor mit einem ersten und zweiten Abschnitt sind drehbar auf einem weiteren gemeinsamen Bolzen befestigt, der fest mit dem Schwenkelement der Antriebsvorrichtung verbunden ist. Das Kugelgelenk hat einen exzentrischen Ansatz, über den das Kugelgelenk auf dem Bolzen zusammen mit dem Zahnrad und dem ersten Abschnitt des Sensors bei Drehung des Zahnrads gedreht werden kann. Die Drehung des Kugelgelenks über den Bolzen bewirkt, daß die Lage des Verbindungspunktes , an dem die Strebe mit dem Schwenkelement verbunden ist, verändert wird. Diese Veränderung resultiert in einer Veränderung des Abstandes zwischen dem Verbindungspunkt und der Welle. Entsprechend der resultierenden Abstandsänderung erfolgt auf diese Weise die Änderung des Schwenkwinkels des fest mit dem Blatt verbundenen Schwenkelementes. Die bekannte Wischvorrichtung ist wiederum komplex im mechanischen Aufbau, und benötigt eine Vielzahl von Komponenten, wie beispielsweise zwei Motoren.

Der Erfindung liegt daher das technische Problem zugrunde, eine Wischvorrichtung zu schaffen, bei der ein Anschlagen des Wischerarms an den Fensterpfosten aufgrund der durch die Fahrgeschwindigkeit hervorgerufenen Windkräfte verhindert wird und die einfach im Aufbau ist.

Die Lösung des technischen Problems ergibt sich durch die Merkmale des Patentanspruchs 1. Durch die Zuordnung eines Geschwindigkeits-Sensors, dessen Signalverlauf auf dem Positionsregler und/oder den Sollverlauf und/oder den Detektor zur Erfassung der Position der Abtriebswelle derart einwirkt, daß der eingestellte Wischwinkel des Wischers bei höheren Geschwindigkeiten des Fahrzeuges und/oder höheren Wischwinkelgeschwindigkeiten reduziert wird, sind keinerlei mechanische Änderungen der Wischervorrichtung notwendig. Da die Geschwindigkeit eines Fahrzeuges ohnehin erfaßt werden muß, kann auf den Signalverlauf bereits vorhandener Sensoren zurückgegriffen werden, so daß der zusätzliche Hardware-Bedarf sich im wesentlichen auf die Verdrahtung beschränkt. Da die Wischwinkelgeschwindigkeit von der Wischvorrichtung selbst eingestellt wird, ist diese ebenfalls ohne weitere zusätzliche Sensorik bekannt, so daß das Erfassungsmittel für die Wischwinkelgeschwindigkeit bereits immanent in der Wischvorrichtung vorhanden ist. Weitere vorteilhafte Ausgestaltungen der Erfindung ergeben sich aus den Unteransprüchen.

In einer weiteren bevorzugten Ausführungsform ist der Detektor zur Erfassung der Position als Hall-Generator ausgebildet, d.h. in Abhängigkeit des Wischwinkels wird die Normalkomponente eines Magnetfeldes zu einem Halbleiterplättchen verändert, was als Hallspannungsänderung detektierbar ist. Der Vorteil dieser berührungslosen Positionserkennung ist, daß keinerlei Verschleiß wie bei den Schleifkontakten eines Potentiometers auftritt.

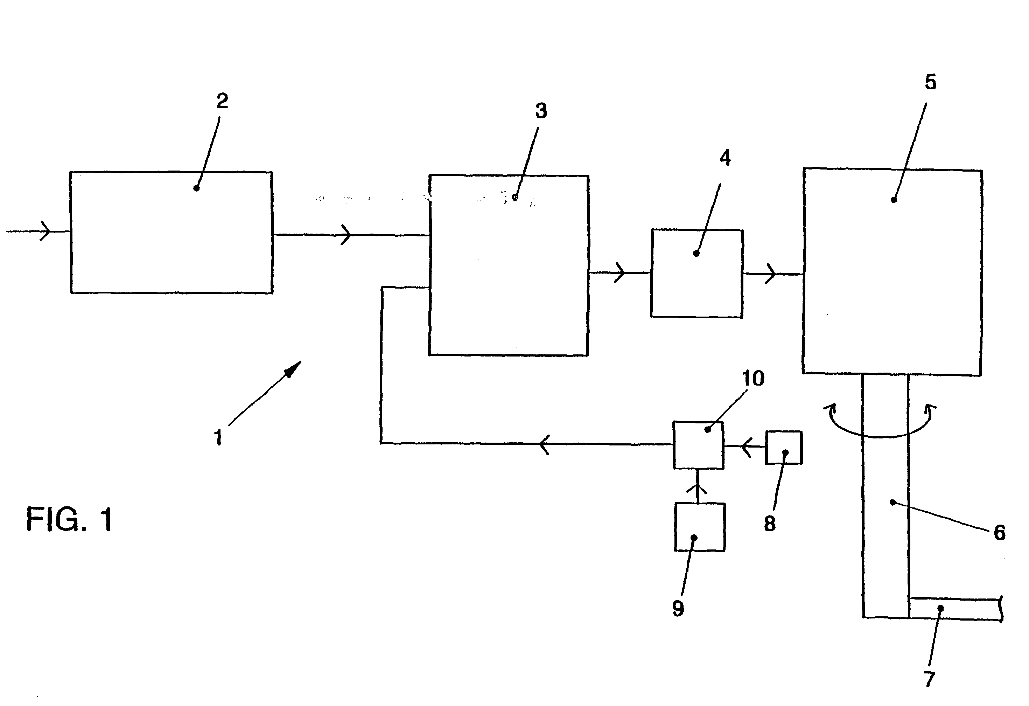

Die Erfindung wird nachfolgend anhand eines bevorzugten Ausführungsbeispiels näher erläutert. Die einzige Figur zeigt ein schematisches Blockschaltbild der Wischervorrichtung.

Die Wischervorrichtung 1 umfaßt einen Funktionsgenerator 2, einen Positionsregler 3, einen Verstärker 4, einen Elektromotor 5 mit einer Abtriebswelle 6, an der starr ein Wischerarm 7 eines nicht dargestellten Wischers gekoppelt ist, einen Detektor 8 zur Erfassung der Position der Abtriebswelle 6, einen Geschwindigkeits-Sensor 9 und einen Verstärker 10.

Mittels des Funktionsgenerators 2 wird ein Sollverlauf dem Positionsregler 3 beispielsweise in Form einer sinusförmigen Spannung zugeführt. Der Positionsregler 3 erzeugt eine vorzeichenbehaftete Differenzgröße zwischen dem Sollverlauf und einem vom Detektor 8 erfaßten Istverlauf der Abtriebswelle 6. Sei nun angenommen, daß das Ausgangssignal des Detektors 8 zu Beginn Null ist, so erzeugt der Positionsregler 3 mit steigendem sinusförmigen Sollverlauf ein positives Differenzsignal, das durch den Verstärker 4 vorzeichengerecht verstärkt und dem Elektromotor 5 als Steuergröße zugeführt wird, wobei die Drehrichtung des Elektromotors 5 bzw. dessen Abtriebswelle 6 vom Vorzeichen der Steuergröße abhängig ist. Die positive Steuergröße bewirkt eine Drehung der Abtriebswelle 6 in eine bestimmte Richtung, wobei der Wischerarm 7 entsprechend ausgelenkt wird. Die Drehung der Abtriebswelle 6 wird vom Detektor 8 erfaßt. Vorzugsweise ist der Detektor 8 derart ausgebildet, daß dieser eine Positionsänderung direkt in ein elektrisches Signal wandelt. Dazu kann dieser beispielsweise als Potentiometer ausgebildet sein, das derart mit der Abtriebswelle 6 verbunden ist, daß eine Positionsänderung den Widerstandswert verändert, so daß bei konstantem Strom die abfallende Spannung über dem Potentiometer ein Maß für die Position der Abtriebswelle 6 ist. Alternativ kann der Detektor 8 als Hall-Generator ausgebildet sein. Dabei wird ausgenutzt, daß eine Normalkomponente eines magnetischen Feldes in einem stromdurchflossenem Halbleiterbauelement eine Querspannung bewirkt, die zur Größe der Normalkomponente proportional ist. Durch Anordnung eines Permanentmagneten auf der Abtriebswelle 6 verändert dieser bei Drehung der Abtriebswelle 6 seine Position zu dem ortsfest angeordneten Halbleiterplättchen, so daß sich auch die wirksame Normalkomponente und damit die Hallspannung verändert. Prinzipiell kann auch der Magnet bzw. die das magnetische Feld hervorrufende Vorrichtung ortsfest angeordnet werden und das Halbleiterplättchen mit der Abtriebswelle 6 verbunden werden. Das Ausgangssignal des Detektors 8 erhöht sich und folgt dem Sollverlauf solange, bis das Maximum des Sollverlaufs bei T/4 erreicht ist. Mit abnehmendem Sollverlauf ist nun das Ausgangssignal des Detektors 8 größer und das Vorzeichen am Ausgang des Positionsreglers 3 wechselt, was auch einen Wechsel der Drehrichtung der Abtriebswelle 6 und somit des Wischerarms 7 zur Folge hat. Zur Variation des Wischwinkels kann beispielsweise die Ausgangsspannung des Detektors 8 verstärkt werden, was eine Reduzierung zur Folge hätte, da bereits eine geringere Drehung der Abtriebswelle 6 die maximale Kompensationsspannung für den Sollverlauf bewirken würde. Ebenso könnte auch die Amplitude des Sollverlaufs verändert werden. Die Geschwindigkeit des Wischvorgangs kann durch Variation der Frequenz des Sollverlaufs erfolgen.

Zur Kompensation der auftretenden Windkräfte bei großen Fahrzeuggeschwindigkeiten wird daher die Geschwindigkeit mittels eines Geschwindigkeits-Sensors 9 erfaßt und als Steuergröße auf den Verstärker 10 gegeben. Wie bereits ausgeführt wäre eine Steuerung des Funktionsgenerators 2 ebenso möglich. Die geschwindigkeitsabhängige Ausgangsspannung des Geschwindigkeits-Sensors 9 steuert die Verstärkung des Verstärkers 10 bei höheren Geschwindigkeiten hoch, so daß der Wischwinkel des Wischers reduziert wird und die Gefahr eines Anschlagens an den Fensterpfosten vermieden wird. Da Wischerarm 7 und Abtriebswelle 6 starr gekoppelt sind, hat eine durch Windkräfte verursachte zusätzliche Auslenkung des Wischerarms 7 auch einen Einfluß auf die Position der Abtriebswelle 6, deren Position durch den Detektor 8 erfaßt wird, so daß die Reduzierung des Wischwinkels gerade derart gewählt werden kann, daß der effektive Wischwinkel ein optimales Sichtfeld schafft. Muß nun die Wischwinkelgeschwindigkeit erhöht werden, beispielsweise weil die Intensität des Regens zugenommen hat, so wird die Frequenz des Sollverlaufs durch den Frequenzgenerator 2 erhöht, was sowohl stufenweise als auch kontinuierlich erfolgen kann. Da die Änderung der Frequenz durch den Frequenzgenerator 2 selbst vorgenommen wird, wird die Maßnahme zur Reduzierung vorzugsweise auch direkt am Frequenzgenerator vorgenommen. Dazu kann wie bereits ausgeführt die Amplitude des Sollverlaufs reduziert werden. Dadurch stellt sich der Vorgang der Wischwinkelreduzierung bei höheren Wischwinkelgeschwindigkeiten als rein interner Vorgang des Frequenzgenerators dar, so daß auch keine zusätzlichen Sensoren oder Meßleitungen benötigt werden. Allerdings kann die Reduzierung prinzipiell an jeder Stelle vorgenommen werden, an der Wischwinkel beeinflußbar ist. Wie leicht einsichtlich können die beiden Gründe für eine Wischwinkelreduzierung sowohl einzeln als auch zusammen auftreten.

## Patentansprüche

1. Wischvorrichtung (1) für Fahrzeuge, umfassend einen drehrichtungsumkehrbaren Motor (5) mit einer Abtriebswelle (6), an der starr ein Wischer gekoppelt ist, einen den Motor (5) mit einer Stellgröße beaufschlagenden Positionsregler (3), dem ein Sollverlauf und ein von einem Detektor (8) zur Erfassung der Position der Abtriebswelle (6) erfaßter Istverlauf zugeführt werden,
**dadurch gekennzeichnet, daß**
der Wischvorrichtung (1) ein Fahrzeug-Geschwindigkeits-Sensor (9) und/oder ein Erfassungsmittel für die Wischwinkelgeschwindigkeit zugeordnet sind, deren Signalverlauf auf den Positionsregler (3) derart einwirkt, daß der Wischwinkel des Wischers bei höheren Geschwindigkeiten des Fahrzeuges beziehungsweise bei höheren Wischwinkelgeschwindigkeiten ohne mechanische Änderung der Wischvorrichtung (1) reduziert wird.

2. Wischvorrichtung nach Anspruch 1, **dadurch gekennzeichnet, daß** der Detektor (8) zur Erfassung der Position als Potentiometer oder als Hall-Generator ausgebildet ist.

3. Wischvorrichtung nach Anspruch 1 oder 2, **dadurch gekennzeichnet, daß** der Wischvorrichtung (1) ein Funktionsgenerator (2) zugeordnet ist, mittels dessen der Sollverlauf erzeugbar ist.

4. Wischvorrichtung nach einem der vorangegangenen Ansprüche, **dadurch gekennzeichnet, daß** der Motor als Elektromotor (5) ausgebildet ist.

5. Wischvorrichtung nach Anspruch 4, **dadurch gekennzeichnet, daß** der Motor als Gleichstrommotor ausgebildet ist.

6. Wischvorrichtung nach einem der vorangegangenen Ansprüche, **dadurch gekennzeichnet, daß** der Positionsregler (3) als Differenzverstärker ausgebildet ist.

7. Wischvorrichtung nach einem der Ansprüche 3 bis 6, **dadurch gekennzeichnet, daß** die Frequenz des Funktionsgenerators (2) veränderbar ist.

## Claims

1. Wiper device (1) for vehicles, comprising a motor (5) which can be reversed in direction of rotation and has an output shaft (6), to which a wiper is rigidly coupled, a position controller (3), which acts upon the motor (5) with a manipulated variable and which is supplied with a desired profile and an actual profile detected by a detector (8) for detecting the position of the output shaft (6), **characterized in that** the wiper device (1) is assigned a vehicle speed sensor (9) and/or a detecting means for the wiping angle speed, the signal profile of which acts on the position controller (3) in such a manner that the wiping angle of the wiper is reduced at higher speeds of the vehicle or at higher wiping angle speeds without a mechanical change to the wiper device (1).

2. Wiper device according to Claim 1, **characterized in that** the detector (8) for detecting the position is designed as a potentiometer or as a Hall generator.

3. Wiper device according to Claim 1 or 2,
**characterized in that** the wiper device (1) is assigned a function generator (2) by means of which the desired profile can be generated.

4. Wiper device according to one of the preceding claims, **characterized in that** the motor is designed as an electric motor (5).

5. Wiper device according to Claim 4, **characterized in that** the motor is designed as a DC motor.

6. Wiper device according to one of the preceding claims, **characterized in that** the position controller (3) is designed as a differential amplifier.

7. Wiper device according to one of Claims 3 to 6, **characterized in that** the frequency of the function generator (2) can be changed.

## Revendications

1. Système d'essuie-glace (1) pour véhicules, comprenant un moteur à sens de rotation réversible (5) avec un arbre de sortie (6) auquel est accouplé rigidement un essuie-glace, un régulateur de position (3) sollicitant le moteur (5) avec une valeur de réglage, auquel sont acheminées une allure de consigne et une allure réelle détectée par un détecteur (8) pour la détection de la position de l'arbre de sortie (6),
**caractérisé en ce que**
un capteur de vitesse de véhicule (9) et/ou un moyen de détection de la vitesse de l'angle de balayage sont associés au système d'essuie-glace (1), leur allure de signal agissant sur le régulateur de position (3) de telle sorte que l'angle de balayage de l'essuie-glace soit réduit à des vitesses plus élevées du véhicule ou à des vitesses d'angle de balayage plus élevées sans modification mécanique du système d'essuie-glace (1).

2. Système d'essuie-glace selon la revendication 1, **caractérisé en ce que** le détecteur (8) pour la détection de la position est réalisé sous la forme d'un potentiomètre ou d'un générateur à effet Hall.

3. Système d'essuie-glace selon la revendication 1 ou 2, **caractérisé en ce qu'**un générateur de fonction (2) est associé au système d'essuie-glace (1) et permet de produire l'allure de consigne.

4. Système d'essuie-glace selon l'une quelconque des revendications précédentes, **caractérisé en ce que** le moteur est réalisé sous la forme d'un moteur électrique (5).

5. Système d'essuie-glace selon la revendication 4, **caractérisé en ce que** le moteur est réalisé sous la forme d'un moteur à courant continu.

6. Système d'essuie-glace selon l'une quelconque des revendications précédentes, **caractérisé en ce que** le régulateur de position (3) est réalisé sous la forme d'un amplificateur différentiel.

7. Système d'essuie-glace selon l'une quelconque des revendications 3 à 6, **caractérisé en ce que** la fréquence du générateur de fonction (2) peut être modifiée.
